# EUROPEAN PATENT SPECIFICATION

(11) **EP 1 780 007 B1**
(45) Date of publication and mention of the grant of the patent: **17.10.2018**
(21) Application number: 04771358.1
(22) Date of filing: 06.08.2004
(51) Int. Cl.: B32B 27/00

(54) **MULTILAYER RESIN FILM, RESIN-COATED METAL PLATE, MULTILAYER RESIN FILM PRODUCING METHOD, AND RESIN-COATED METAL PLATE PRODUCING METHOD**
MEHRSCHICHTIGER HARZFILM, HARZBESCHICHTETE METALLPLATTE, VERFAHREN ZUR HERSTELLUNG EINES MEHRSCHICHTIGEN HARZFILMS UND VERFAHREN ZUR HERSTELLUNG EINER HARZBESCHICHTETEN METALLPLATTE
FILM DE RÉSINE MULTICOUCHES, PLATEAU MÉTALLIQUE ENDUIT DE RÉSINE, PROCÉDÉ DE PRODUCTION DE FILM DE RÉSINE MULTICOUCHES, ET PROCÉDÉ DE PRODUCTION DE PLATEAU MÉTALLIQUE ENDUIT DE RÉSINE

(43) Date of publication of application: 02.05.2007
(73) Proprietor: Toyo Kohan Co., Ltd., Tokyo 102-8447 (JP)
(72) Inventor: MATSUBARA, Yasuhiro TOYO KOHAN CO., LTD., Kudamatsu-shi, Yamaguchi 7448611 (JP); MAIDA, Norimasa TOYO KOHAN CO., LTD., Kudamatsu-shi, Yamaguchi 7448611 (JP); NAKAMURA, Takuji TOYO KOHAN CO., LTD., Kudamatsu-shi, Yamaguchi 7448611 (JP); INAZAWA, Hiroshi TOYO KOHAN CO., LTD., Kudamatsu-shi, Yamaguchi 7448611 (JP); KOJO, Harunori TOYO KOHAN CO., LTD., Kudamatsu-shi, Yamaguchi 7448611 (JP)
(74) Representative: Vossius & Partner Patentanwälte Rechtsanwälte mbB
(86) International application number: PCT/JP2004/011359
(87) International publication number: WO 2006/013633

(56) References cited:
- EP-A1- 1 757 439
- JP-A- 10 086 308
- JP-A- 11 240 068
- JP-A- 63 154 322
- JP-A- 2000 071 388
- JP-A- 2004 299 390
- SAWADA K.: 'Plastic Oshidashi Seikei no Saishin Gijutsu.' 25 June 1993, pages 121 - 124, XP002996440

## Description

### BACKGROUND ART

Cans formed by drawing or drawing and ironing from metal plates coated with resin films are used in large quantities in the field of drink cans, etc. This is due to the resin films excellently remaining adherent to the metal plates during their working and highly impermeable to the contents of the cans. As the cans formed from metal plates coated with resin films have recently come to be used to hold a wide variety of contents, and as a further reduction in weight of cans and a further improvement in the workability of the metal plates have been required for achieving a reduction in the cost of can production, it has become difficult to rely on a single-layer resin film for both high impermeability and high adhesive property on the metal plate. Attempts have, therefore, come to be made to form a resin film having high adhesive property and another having high impermeability separately and combine them into a multilayer film to form a resin film having both high adhesive property and high impermeability for coating a metal plate.

However, when a multilayer film is formed from resin films having different physical properties as stated above, it is necessary to form a film by melting and co-extruding resins having different melting points and showing different melt viscosities when heated at the same temperature, but when the resins having different melting points are melted by heating at the same temperature, it is often the case that the resin having a higher melting point shows a higher melt viscosity, while the resin having a lower melting point shows a lower melt viscosity. When the resins melted by heating at the same temperature are formed into a multilayer film by a multi-manifold die, and when the resins in the adjoining layers differ in melt viscosity, it is possible that the individual molten resins leaving the individual manifolds and joined into a multilayer resin film may flow in a disorderly way between the resin layers and form a film surface having an uneven thickness. The unevenness in thickness which occurs to the film surface is called a flow mark and is not only visually defective, but also disables any uniform working when a can is formed by drawing or drawing and ironing, or is reduced in diameter across its top opening, resulting in a broken can. The extrusion of the molten resin at a high speed for achieving an improved production rate results in a film having an increased difference in width, or wider edges to be cut off, or allows the resin extruded through the die lips to fall in a pulsating way instead of uniformly and fails to produce a film of uniform thickness. The methods disclosed in the publications stated below have been tried to restrict the occurrence of any such edges or uneven thickness (flow marks) .

JP 08 290532 A discloses a method of preventing the formation of any flow mark by using selectively resins having only small differences in melting point and melt viscosity, but as the physical properties required of a resin film often makes it imperative to select resins having large differences in melting point and melt viscosity, the method disclosed in the publication can be employed only for a greatly limited scope of application.

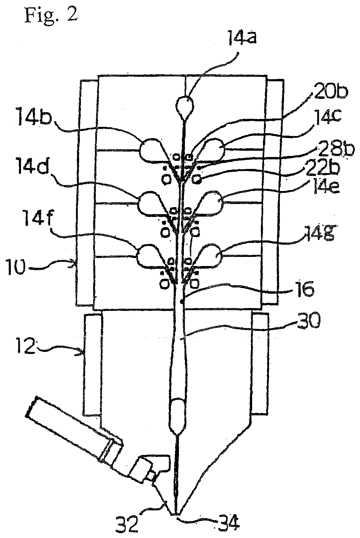

JP 11 309 770 A discloses a method for multilayer extrusion molding employing a feed block and a T-die connected to the feed block for forming a multilayer resin film in accordance with the feed block method in which a plurality of molten resin layers are joined in front of the T-die, wherein a heater installed in the feed block has its temperature controlled to reduce any faulty phenomenon, such as any difference between the layers joined into a multilayer film (i.e. flow mark). Fig. 2 is a schematic illustration of a multilayer extrusion molding apparatus. The multilayer extrusion molding apparatus comprises a feed block 10 having a plurality of manifolds 14a to 14g and a T-die 12 connected to the feed block 10 below a joining point 16 for the resins from the manifolds 14a to 14g. Heaters 20b and 22b and a thermometer 28b, etc. are installed around the joining point of the resin passages from the manifolds 14a to 14g, for example, in the resin passage from the outlet of the manifold 14b (only the manifold 14b being referred to for simplicity of explanation), for controlling the temperature/viscosity of the molten resin materials supplied from the manifolds to unify the temperature/viscosity thereof and thereby reduce any faulty phenomenon between the resin layers joining into a multilayer resin film.

According to the feed block method, however, the T-die into which the multilayer film of the resins joined together flows has a single-layer internal structure, there is a long distance between the joining point 16 and the outlet opening 34 of die lip 32 and when the molten resins move along that distance, the T-die is heated only as a whole. Therefore, it is impossible to maintain the difference between different heating temperatures employed for different resin layers to have the same viscosity immediately after joining together and as the heating temperatures of the resin layers vary at the outlet opening 34, it is impossible to maintain the same melt viscosity for the resin layers and it is difficult to prevent the formation of any flow mark. Thus, the method disclosed by the publication can be employed only for a limited scope of application as in the case of using resins not having a very big difference in melting point to achieve the same melt viscosity. No increased film-forming rate can be realized even by the method disclosed in either publication if the molten resins are low in tension.

JP 10 086308 A discloses a laminate obtained by laminating resin containing polyester as a main body on a base. The resin layer is disclosed to have a particular melt viscosity ratio at the time of melt extruding.

JP 2000 071388 A discloses a laminate constituted of a metal substrate and a thermoplastic polyester layer provided on the surface of the substrate.

JP 63 154322 A discloses a method of manufacturing a composite film or sheet for metal coating.

JP 11 240068 A discloses a method for preparing a multi-layer inflation film.

Different dies are discussed by SAWADA K. in "Plastic Oshidashi Seikei no Saishin Gijutsu", pp. 121-124.

### DISCLOSURE OF THE INVENTION

### PROBLEMS TO BE SOLVED BY THE INVENTION

It is an object of the present invention to provide a method of manufacturing a multilayer resin film in which a plurality of molten resins differing in melt viscosity are laminated at a high speed and without forming any surface unevenness to form a multilayer resin film and a method of manufacturing a resin-coated metal plate by laying a multilayer resin film on a metal plate.

### MEANS FOR SOLVING THE PROBLEMS

These objects are obtained with the method of manufacturing a multilayer resin film according to claim 1 and the method of manufacturing a resin-coated metal plate according to claim 2.

### BRIEF DESCRIPTION OF THE DRAWINGS

Fig. 1 is a schematic illustration of a method of manufacturing a multilayer film according to the present invention.
Fig. 2 is a schematic illustration of a known method of manufacturing a multilayer film.

Referring to the symbols in the drawings, 1 denotes a multi-manifold die, 2a and 2b manifolds, 3a, 3b, 4a and 4b heaters, 5 a lip land, 6a an extruder, 6b an extruder, 7 a discharge port, 8 a multilayer resin film, 9 a cooling roll, 10a, 10b, 11a and 11b heaters, 12 a take-up device, 14a, 14b, 14c, 14d, 14e, 14f and 14g manifolds, 16 a joining point, 20b and 22b heaters, 28 a thermometer, 32 a die lip, and 34 an outlet opening.

### BEST MODE OF CARRYING OUT THE INVENTION

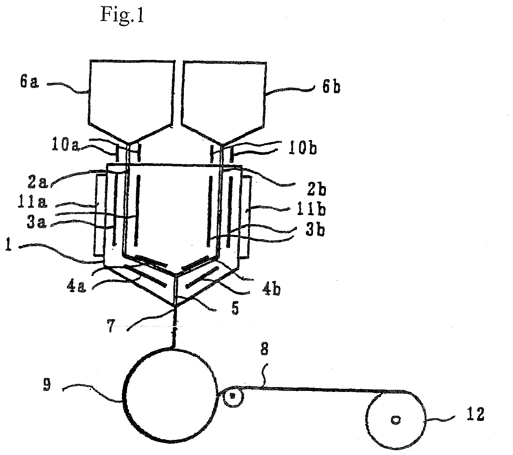

The present invention will now be described with reference to the drawings. Fig. 1 is a schematic illustration of a method of manufacturing a multilayer film of the present invention composed of a plurality of resin layers differing in melt viscosity. Its use in the formation of a two-layer resin film is illustrated for simplicity of explanation. A multi-manifold die 1 has two manifolds 2a and 2b to which an extruder 6a for heating a resin having a high melt viscosity and extruding a molten resin and an extruder 6b for heating a resin having a low melt viscosity and extruding a molten resin are connected, respectively, by resin passages. The manifolds 2a and 2b meet in the bottom portion of the multi-manifold die 1 to form a lip land 5 connected to a discharge port 7 formed in a die lip at the bottom of the multi-manifold die 1.

The multi-manifold die 1 has a heater 11a for heating a die body portion through which the resin of high melt viscosity passes, a heater 11b for heating a die body portion through which the resin of low melt viscosity passes, heaters 3a and 3b and heaters 4a and 4b installed adjacent to the manifolds 2a and 2b, respectively, for heating them, and heaters 10a and 10b for heating the resin passages connecting the extruders 6a and 6b and the multi-manifolds 2a and 2b, respectively. Temperature measuring devices not shown, such as thermocouples, are installed near the areas of those heaters for measuring the temperatures of those areas and controlling the heating temperatures of the heaters individually so that the molten resins in the manifolds 2a and 2b may have a viscosity difference held within a specific range.

The two resins heated and melted in the extruders 6a and 6b and having a difference in melt viscosity of 3, 000 to 20, 000 poises at a shear rate of 20 to 500 second⁻¹ pass through the manifolds 2a and 2b formed in the multi-manifold die 1, respectively, are laminated at the inlet of the lip land 5 formed in the bottom portion of the multi-manifold die 1 and are discharged through the discharge port 7 in the die lip at the bottom of the die 1 onto a cooling roll 9 installed below the discharge port 7 and holding a coolant, such as water, circulated in its inside, whereby they are cooled and solidified to form a multilayer resin film 8 which is continuously taken up by a take-up device 12, such as a coiler for taking it up in the form of a coil.

The apparatus for manufacturing a multilayer resin film as described above can be used to manufacture a multilayer resin film of the present invention as will be described below. The applicable resin film is not specifically limited, but any polyester resin as stated below is, for example, applicable. As regards the acid component from which a polyester resin is derived, it is possible to mention, for example, a dibasic aromatic dicarboxylic acid such as terephthalic, isophthalic, orthophthalic, p-β-oxyethoxybenzoic, naphthalene-2,6- dicarboxylic, diphenoxyethane-4,4'-dicarboxylic or 5-sodium-sulfoisophthalic acid, an alicyclic dicarboxylic acid such as hexahydroterephthalic or cyclohexanediacetic acid, an aliphatic dicarboxylic acid such as adipic, sebacic or dimer acid, and a polybasic acid such as trimellitic, pyromellitic, hemimellitic, 1,1,2,2-ethanetetracarboxylic, 1,1,2-ethanetricarboxylic, 1,3,5-pentanetricarboxylic, 1,2,3,4-cyclopentanetetracarboxylic or biphenyl-3,4,3',4'- tetracarboxylic acid. They can, of course, be used individually or in a combination of two or more. As regards the alcohol component from which the polyester is derived, it is possible to mention, for example, a diol such a ethylene glycol, propylene glycol, 1,4-butanediol, neopentyl glycol, 1,6-hexylene glycol, diethylene glycol, triethylene glycol or cyclohexane dimethanol, and a polyhydric alcohol such as pentaerithritol, glycerol, trimethylolpropane, 1,2,6-hexanetriol, sorbitol or 1,1,4,4-tetrakis(hydroxymethyl)cyclohexane. They can, of course, be used individually or in a combination of two or more.

Pellets of resins having a difference in melt viscosity of 3,000 to 20,000 poises at a shear rate of 20 to 500 second⁻¹, one of the resins having a melt tension of 1 g or more, as stated above (two kinds of resins in the case of Fig. 1, and for simplicity of explanation, the following description being based on the assumption that the resin heated and melted by the extruder 6a shown in Fig. 1 has a melt tension of 1 g or more), are melted by heating in the extruders 6a and 6b, respectively, and the molten resins are introduced into the manifolds 2a and 2b in the multi-manifold die 1 installed below the extruders through the resin passages connected therewith, respectively, and move toward their joining point. While each resin is heated by the heaters 10a or 10b, 11a or 11b, 3a or 3b and 4a or 4b, the heating temperatures of the heaters are measured by the temperature measuring devices installed near the heaters, such as thermocouples, and are so controlled that the resins may have a difference in melt viscosity of 3,000 poises or less at a shear rate of 20 to 500 second⁻¹.

The molten resins so controlled as to have a difference in melt viscosity of 3,000 poises or less at a shear rate of 20 to 500 second⁻¹ are laminated at the inlet of the lip land 5 at the joining point of the manifolds 2a and 2b and discharged onto the cooling roll 9 through the discharge port 7 to solidify into a multilayer (two-layer) film 8, but when the molten resins are extruded at a high speed, and if the resins have a melt tension of less than 1 g at their extrusion temperature, the molten resins extruded in film form pulsate and form a film having an uneven thickness along its length or undesirable widthwise protrusions. The pulsation and the formation of undesirable widthwise protrusions can be prevented by employing a resin having a melt tension of 1 g or more as at least one of the resins and controlling the extrusion of the resins so that the resin having a melt tension of 1 g or more may form a thickness equal to or larger than one-third of the entire thickness of the multilayer film as extruded. Thus, the film can be formed at a still higher speed.

After the resins have their melt viscosity difference controlled and at least one of the resins having a melt tension of 1 g or more has its extruded amount controlled as stated above, the multilayer (two-layer) film 8 obtained upon solidification of the resins discharged onto the cooling roll 9 through the discharge port 7 is wound on the take-up device 12. Thus, the multilayer resin film of the present invention is manufactured.

The multilayer resin film of the present invention produced as described above preferably has a surface unevenness of 5 µm or less. Its unevenness exceeding 5 µm is not only a visual defect, but also makes it impossible to form a can from a coated metal plate made by coating a metal plate with such a multilayer resin film, since the resin film peels off the metal plate when the coated metal plate is subjected to drawing or drawing and ironing to form a can, or when a can has its top opening reduced in diameter, or a local difference in workability causes a can to break during its drawing, or drawing and ironing work, or crash when its top opening is reduced in diameter.

The method of manufacturing a multilayer resin film as described above can also be employed to discharge a plurality of molten resin layers directly onto a metal plate through the discharge port of the die lip to form a multilayer resin film of the present invention thereon and thereby produce a metal plate coated with a multilayer resin film. The multilayer resin film formed by the method as described above can alternatively be laid on a metal plate directly or with an adhesive therebetween to produce a metal plate coated with a multilayer resin film. When a plurality of molten resin layers are discharged directly onto a metal plate for coating it, it is preferable for the reasons stated before that the multilayer resin film coating the metal plate have a surface unevenness of 5 µm or less.

Although the foregoing description has been of the formation of a two-layer resin film from two kinds of resins, it is needless to say that a resin film composed of three or more layers can be formed by employing a multi-manifold die having three or more manifolds and three or more extruders connected to those manifolds.

### EXAMPLES

The present invention will now be described in detail based on examples thereof.

### (Example 1)

Extruders were employed to melt by heating to 270°C a polyester resin A of high impermeability (an ethylene terephthalate/ethylene isophthalate copolymer (containing 5 mole % of ethylene isophthalate) having a melting point of 230°C, an intrinsic viscosity of 0.92, a melt viscosity of 10,000 poises at 270°C and at a shear rate of 100 second⁻¹ and a melt tension of 0.8 g) (hereinafter referred to simply as resin A, and having its melt tension measured by a CAPILOGRAPH 3A (trade name of TOYO SEIKI K.K.) employing a resin temperature of 260°C, an extrusion rate of 10 mm/min., a take-up rate of 10 m/min., a nozzle diameter of 1 mm and a nozzle length of 10 mm) and a polyester resin B of high working and adhesive property (an ethylene terephthalate/ethylene isophthalate copolymer (containing 15 mole % of ethylene isophthalate) modified with trimellitic acid (0.3 mole %) and having a melting point of 215°C, an intrinsic viscosity of 0.9, a melting point of 215°C, a melt viscosity of 8,000 poises at 270°C and at a shear rate of 100 second⁻¹ and a melt tension of 1.2 g) (hereinafter referred to simply as resin B). Then, the molten resins A and B were introduced into two manifolds of a multi-manifold die having its manifolds connected to two extruders by resin passages and having heaters installed adjacent to the manifolds and having their temperatures controlled individually, while the amounts thereof were so controlled that a two-layer resin film formed from the resins might have a thickness of 16 µm occupied by the resins A and B in a ratio of 2:1. That portion of the multi-manifold die, resin passage and manifold through which the molten resin A was supposed to pass, and that portion of the multi-manifold die, resin passage and manifold through which the molten resin B was supposed to pass were all preheated to 260°C by the heaters installed adjacent thereto, respectively, and the molten resins A and B were passed through the respective manifolds. After the molten resins A and B had been heated as stated, the molten resins A and B were caused to join and lie on each other at the joining point of the manifolds, and when the two resin layers were conveyed from the joining point of the manifolds through the lip land and discharged through the discharge port at a rate of 150 m/min. , there was no pulsation of the resins, nor was any undesirable widthwise film protrusion formed. The resins which had been discharged were dropped onto the cooling roll installed below the discharge port and having water circulated therein, cooled and solidified into a two-layer resin film having a width of about 1 m, and it was taken up on the coiler.

### (Comparative Example 1)

The same resins A and B as in Example 1 were heated and melted by employing the same extruders and multi-manifold die as in Example 1 and under the same conditions as in Example 1, except for the amounts thereof so controlled as to form a two-layer film having a thickness occupied by the resins A and B in a ratio of 2.5:1, and when the two resin layers were conveyed from the joining point of the manifolds through the lip land and discharged through the discharge port at a rate of 150 m/min., there was pulsation of the resins and undesirable widthwise film protrusions were formed. The resins which had been discharged were dropped onto the cooling roll installed below the discharge port and having water circulated therein, and were cooled and solidified into a two-layer resin film having a width of about 1 m, and it was taken up on the coiler.

### (Comparative Example 2)

The same resins A and B as in Example 1 were heated and melted by employing the same extruders and multi-manifold die as in Example 1 and under the same conditions as in Comparative Example 1, except for the amounts thereof so controlled as to form a two-layer film having a thickness occupied by the resins A and B in a ratio of 2.5:1, and when the two resin layers were conveyed from the joining point of the manifolds through the lip land and discharged through the discharge port at a rate of 80 m/min., there was no pulsation of the resins, nor was any undesirable widthwise film protrusion formed. The resins which had been discharged were dropped onto the cooling roll installed below the discharge port and having water circulated therein, and were cooled and solidified into a two-layer resin film having a width of about 1 m, and it was taken up on the coiler.

### (Comparative Example 3)

The same resin A as in Example 1 and a polyester resin C of high working and adhesive property (an ethylene terephthalate/ethylene isophthalate copolymer (containing 15 mole % of ethylene isophthalate) having a melting point of 215°C, an intrinsic viscosity of 0.9, a melting point of 215°C, a melt viscosity of 9,000 poises at 270°C and at a shear rate of 100 second⁻¹ and a melt tension of 0.7 g) (hereinafter referred to simply as resin C) were heated and melted under the same conditions as in Example 1 by controlling the amounts thereof to form a two-layer film having a thickness occupied by the resins A and C in a ratio of 2:1 as in Example 1, and when the two resin layers were conveyed from the joining point of the manifolds through the lip land and discharged through the discharge port at a rate of 150 m/min., there was pulsation of the resins and undesirable widthwise film protrusions were formed. The resins which had been discharged were dropped onto the cooling roll installed below the discharge port and having water circulated therein, and were cooled and solidified into a two-layer resin film having a width of about 1 m, and it was taken up on the coiler.

### (Example 2)

The same resin A as in Example 1 and a polyester resin D of high working and adhesive property (an ethylene terephthalate/ethylene isophthalate copolymer (containing 15 mole % of ethylene isophthalate) modified with trimellitic acid (0.2 mole %) and having a melting point of 215°C, an intrinsic viscosity of 0.7, a melting point of 215°C, a melt viscosity of 7,500 poises at a temperature of 270°C and at a shear rate of 100 second⁻¹ and a melt tension of 1.0 g) (hereinafter referred to simply as resin D) were melted by employing extruders and heating the resin A to 280°C and the resin D to 260°C. Then, the molten resins A and D were introduced into two manifolds of a multi-manifold die having its manifolds connected to two extruders by resin passages and having heaters installed adjacent to the manifolds and having their temperatures controlled individually, while the amounts thereof were so controlled that a two-layer resin film formed from the resins might have a thickness of 16 µm occupied by the resins A and D in a ratio of 2:1. That portion of the multi-manifold die, resin passage and manifold through which the molten resin A was supposed to pass were preheated to 280°C by the heaters installed adjacent thereto, while that portion of the multi-manifold die, resin passage and manifold through which the molten resin D was supposed to pass were preheated to 260°C by the heaters installed adjacent thereto, and the molten resins A and D were passed through the respective manifolds. The resin A had a melt viscosity of 7, 500 poises at a temperature of 280°C and at a shear rate of 100 second⁻¹ and the resin D had a melt viscosity of 7,000 poises at a temperature of 260°C and at a shear rate of 100 second⁻¹. After the molten resins A and D had been heated as stated, the molten resins A and D were caused to join and lie on each other at the joining point of the manifolds, and when the two resin layers were conveyed from the joining point of the manifolds through the lip land and discharged through the discharge port at a rate of 150 m/min., there was no pulsation of the resins, nor was any undesirable widthwise film protrusion formed. The resins which had been discharged were dropped onto the cooling roll installed below the discharge port and having water circulated therein, cooled and solidified into a two-layer resin film having a width of about 1 m, and it was taken up on the coiler.

### <Property Evaluation>

The resin films of Examples 1 and 2 and Comparative Examples 1 to 3 as prepared above were evaluated for properties as will be described below.

### <Unevenness in Thickness>

The thickness of each of the resin films of Examples 1 and 2 and Comparative Examples 1 to 3 was measured continuously along its entire width (about 1 m) at every one meter of its length of 15 m which had been formed by five minutes after the start of its formation (i.e. at a total of 16 points along its length), and a difference between the maximum and minimum values of all the results of the measurements made along the entire width of each film at the 16 points along its length was calculated as its unevenness in thickness.

The results of the evaluation are shown in Table 1.

**[Table 1]**

| Example or Comparative Example | Property Evaluation | Film forming speed |
|---|---|---|
| | Unevenness in thickness (µm) | |
| Example 1 | 1.6 | 150 m/min. |
| Comparative Example 1 | 6.1 | 150 m/min. |
| Comparative Example 2 | 1.9 | 80 m/min. |
| Comparative Example 3 | 5.7 | 150 m/min. |
| Example 2 | 2.0 | 150 m/min. |

When a resin film was formed from a plurality of resins including at least one having a melt tension of 1 g or more by controlling the molten resins so that they might have a difference in melt viscosity of 3,000 poises or less at a shear rate of 20 to 500 second⁻¹, even a high speed of film formation did not cause any increase in pulsation or undesirable widthwise protrusion, but there was obtained a resin film having only a very small unevenness in thickness, as shown in Table 1.

### INDUSTRIAL APPLICABILITY

The resin-coated metal plate obtained by laminating a multilayer resin film of the present invention on a metal plate is suitable for forming a can by drawing, or by drawing and ironing, as the resin film is not separated from the metal plate by its drawing, or drawing and ironing, or by a reduction in diameter of the top opening of a can, and the absence of any local difference in workability ensures the reliable forming of a can without allowing it to break during its drawing, or drawing and ironing, or to crash during a reduction in diameter.

As two or more molten resins having a difference in melt viscosity of 3,000 to 20,000 poises at a shear rate of 20 to 500 second⁻¹ and including at least one resin having a melt tension of 1 g or more at its extrusion temperature are laminated to form a multilayer film by employing a multi-manifold die and controlling the temperature of each of the extruder installed contiguously to each manifold, each manifold and the die portion adjoining each manifold so that the temperatures of the extruder, manifold and die portion through which a resin having a high melt viscosity passes may be held higher than those of the extruder, manifold and die portion through which a resin having a low melt viscosity passes, to maintain a difference in melt viscosity of 3,000 poises or less between any adjoining resin layers at a shear rate of 20 to 500 sec⁻¹, so that the resin having a melt viscosity of 1 g or more may have a thickness equal to or larger than one third of the entire thickness of the film, even a high speed of film formation does not cause any increase in pulsation or undesirable widthwise protrusion, but there is obtained a resin film having only a very small unevenness in thickness. Moreover, as the multilayer film has a surface unevenness of only 5 µm or less, it is not only excellent in visual smoothness, but also its freedom from any stress produced in an ordinary multilayer film by its melt viscosity enables the multilayer resin film of the present invention to coat a metal plate and produce a multilayer resin film-coated metal plate which does not have the resin film turned up and separated from the metal plate even if the resin film may have a scratch.

## Claims

1. A method of manufacturing a multilayer resin film, wherein two or more molten resins including at least one resin having a melt tension of 1 g or more at its extrusion temperature are laminated to form a multilayer film by employing a multi-manifold die and controlling the temperature of each of an extruder installed contiguously to each manifold, each manifold and a die portion adjoining each manifold so that the temperatures of the extruder, manifold and die portion through which a resin having a high melt viscosity passes may be held higher than those of the extruder, manifold and die portion through which a resin having a low melt viscosity passes, to maintain a difference in melt viscosity measured by capillary rheometry of 3,000 poises or less between any adjoining resin layers at a shear rate of 20 to 500 sec⁻¹, so that the resin having a melt tension of 1 g or more may occupy a thickness equal to or larger than one third of the entire thickness of the film, wherein its surface has an unevenness of 5.0 µm or less, wherein the thickness of the resin film is measured continuously along its entire width at every one meter of its length and a difference between the maximum and minimum values of the results of the measurements made along the entire width of the film is calculated as the unevenness.

2. A method of manufacturing a resin-coated metal plate made by laminating a metal plate with a multilayer resin film manufactured according to claim 1, wherein the film is extruded onto the metal plate.

## Patentansprüche

1. Verfahren zum Herstellen einer mehrlagigen Harzschicht, wobei zwei oder mehr geschmolzene Harze, die mindestens ein Harz mit einer Schmelzspannung von 1 g oder mehr bei seiner Extrusionstemperatur aufweisen, laminiert werden, um eine mehrlagige Schicht zu bilden, unter Verwendung einer Mehrfachverteilerdüse und durch Steuern der Temperatur von Extrudern, die angrenzend an jeden Verteiler installiert sind, jedes Verteilers und von einem an jeden Verteiler angrenzenden Düsenabschnitt derart, dass die Temperaturen des Extruders, Verteilers und Düsenabschnitts, durch die ein Harz mit einer hohen Schmelzviskosität fließt, höher gehalten werden können als diejenigen des Extruders, Verteilers und Düsenabschnitts, durch die ein Harz mit einer niedrigen Schmelzviskosität fließt, um einen Unterschied in der Schmelzviskosität, gemessen durch Kapillarrheometrie, von 3000 Poise oder weniger zwischen beliebigen benachbarten Harzlagen bei einer Scherrate von 20 bis 500 s⁻¹ aufrechtzuerhalten, so dass das Harz mit einer Schmelzspannung von 1 g oder mehr eine Dicke von einem Drittel oder mehr der Gesamtdicke der Schicht einnehmen kann, wobei seine Oberfläche eine Unebenheit von 5,0 µm oder weniger aufweist, wobei die Dicke der Harzschicht entlang ihrer gesamten Breite bei jedem einen Meter seiner Länge kontinuierlich gemessen wird und eine Differenz zwischen den Maximal- und Minimalwerten der Ergebnisse der Messungen, die entlang der gesamten Breite der Schicht vorgenommen werden, als die Unebenheit berechnet wird.

2. Verfahren zum Herstellen einer harzbeschichteten Metallplatte, die durch Laminieren einer Metallplatte mit einer mehrlagigen Harzschicht erhalten wird, die durch ein Verfahren nach Anspruch 1 hergestellt wird, wobei die Schicht auf die Metallplatte extrudiert wird.

## Revendications

1. Procédé de fabrication d'un film de résine multicouche, dans lequel deux résines fondues ou plus comprenant au moins une résine ayant une tension de fusion de 1 g ou plus à sa température d'extrusion sont lamifiées pour former un film multicouche en utilisant une filière multi-collecteur et en commandant la température de chaque extrudeur installé de manière contiguë à chaque collecteur, chaque collecteur et une partie de filière étant contigus à chaque collecteur de sorte que les températures de l'extrudeur, du collecteur et de la partie de filière à travers lesquels une résine ayant une haute viscosité à l'état fondu passe peuvent être maintenues à une valeur supérieure à celles de l'extrudeur, du collecteur et de la partie de filière à travers lesquels une résine ayant une faible viscosité à l'état fondu passe, pour maintenir une différence de viscosité à l'état fondu mesurée par rhéométrie capillaire de 3000 poises ou moins entre n'importe quelles couches de résine contiguës à un taux de cisaillement de 20 à 500 s⁻¹, de sorte que la résine ayant une tension de fusion de 1 g ou plus peut occuper une épaisseur supérieure ou égale à un tiers de l'épaisseur entière du film, dans lequel sa surface a une irrégularité de 5,0 µm ou moins, dans lequel l'épaisseur du film de résine est mesurée continûment le long de sa largeur entière à chaque mètre de sa longueur et une différence entre les valeurs maximum et minimum des résultats des mesures effectuées le long de la largeur entière du film est calculée en tant qu'irrégularité.

2. Procédé de fabrication d'une plaque métallique revêtue de résine réalisée en lamifiant une plaque métallique avec un film de résine multicouche fabriqué selon la revendication 1, dans lequel le film est extrudé sur la plaque métallique.
